(19) Europäisches Patentamt
European Patent Office
Office européen des brevets

(11) **EP 3 515 763 B1**

(12) **FASCICULE DE BREVET EUROPEEN**

(45) Date de publication et mention
de la délivrance du brevet:
**04.11.2020 Bulletin 2020/45**

(21) Numéro de dépôt: **17768761.3**

(22) Date de dépôt: **15.09.2017**

(51) Int Cl.:
*B60R 16/023* *(2006.01)*   *G07C 5/00* *(2006.01)*
*G07C 5/08* *(2006.01)*   *G01C 21/34* *(2006.01)*
*B60W 40/12* *(2012.01)*   *B60W 40/13* *(2012.01)*
*B60W 40/10* *(2012.01)*   *B60W 50/00* *(2006.01)*
*B60W 40/02* *(2006.01)*

(86) Numéro de dépôt international:
**PCT/EP2017/073273**

(87) Numéro de publication internationale:
**WO 2018/054775 (29.03.2018 Gazette 2018/13)**

(54) **PROCÉDÉ ET DISPOSITIF D'ANALYSE DE LA RÉPARTITION DES DÉPENSES ÉNERGÉTIQUES D'UN VÉHICULE AUTOMOBILE**

VERFAHREN UND VORRICHTUNG ZUR ANALYSE DER ENERGIEVERBRAUCHSVERTEILUNG EINES KRAFTFAHRZEUGS

METHOD AND DEVICE FOR ANALYSING THE ENERGY EXPENDITURE DISTRIBUTION OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2016 FR 1659039**

(43) Date de publication de la demande:
**31.07.2019 Bulletin 2019/31**

(73) Titulaire: **Compagnie Générale des Etablissements Michelin**
**63000 Clermont-Ferrand (FR)**

(72) Inventeurs:
• **CHASSE, Alexandre**
**75017 Paris (FR)**
• **DI DOMENICO, Domenico**
**69007 Lyon (FR)**
• **SABIRON, Guillaume**
**69008 Lyon (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A1- 2 237 985   WO-A1-2013/006118
DE-T5-112012 006 598   FR-A1- 2 976 888
JP-A- 2010 203 405

**Description**

La présente invention concerne le domaine de la consommation énergétique d'un véhicule automobile, et notamment des véhicules de type « poids lourds » équipés d'un boitier télématique.

Plus particulièrement, la présente invention concerne l'identification et de la quantification des éléments consommateurs d'énergie dans un véhicule de type « poids lourds ».

On entend par boitier télématique, tout dispositif permettant de recevoir des informations en temps réels sur l'environnement et éventuellement de fournir des services aux passagers du véhicule adaptés au contexte. De tels boitiers télématiques sont généralement pourvus d'un système de positionnement, notamment de type système de positionnement global dit « Global Positionning System » ou « GPS » en termes anglo-saxons qui utilise des données de position émises en temps réel par une constellation de satellites géostationnaires afin de déterminer précisément la position du véhicule.

Plus particulièrement, la présente invention concerne l'analyse de la répartition des dépenses énergétiques de chaque véhicule d'une flotte de véhicule.

La connaissance de la répartition des dépenses énergétiques de chaque véhicule d'une flotte de véhicule permet de suivre et d'optimiser au mieux la consommation énergétique des véhicules.

On peut également se référer au document EP 2 237 985 - A1 qui décrit un procédé de gestion de la consommation de carburant d'un véhicule à propulsion hybride sur un trajet donné afin d'optimiser les économies d'énergies, au document DE 11 2012 006598 - A1 qui décrit un dispositif d'évaluation de la conduite d'un véhicule par comparaison entre la consommation de carburant d'un véhicule sur un trajet donné avec la consommation de carburant du véhicule sur le trajet précédent ou encore au document FR 2 976 888 - A1 qui décrit un procédé d'aide au pilotage d'un véhicule automobile en vue d'optimiser la réserve d'énergie, dans lequel on calcule, à partir de la consommation effective d'énergie, une consommation optimisée correspondant à un style de conduite de référence.

Il existe un besoin d'améliorer et de faciliter le traitement de volume important de données afin de mettre en avant de potentiels disfonctionnements au sein d'un véhicule ou d'une flotte de véhicules grâce à un bilan énergétique complet.

La présente invention a donc pour objet de répondre à ce besoin.

L'invention a pour objet un procédé d'analyse de la répartition des dépenses énergétiques d'un véhicule automobile à partir de données d'un réseau de communication « CAN », et de paramètres du véhicule, dans lequel :

- on calcule les dépenses énergétiques du véhicule sur un trajet,
- on analyse lesdites dépenses énergétiques par comparaison avec au moins un modèle d'un véhicule simulant le même trajet,
- on élabore un bilan énergétique en fonction de l'analyse des dépenses énergétiques et de la consommation de carburant et on communique ledit bilan énergétique à un serveur externe.

Par « dépenses énergétiques », on entend toutes les énergies dépensées à différentes étapes de la chaine de traction permettant d'établir une répartition des dépenses énergétiques du véhicule.

Par « modèle du véhicule », on entend une représentation mathématique d'une dynamique du véhicule. Un tel modèle comprend des paramètres physiques d'un véhicule à renseigner, des entrées et des sorties. Les paramètres physiques sont issus d'une base de données ou d'une cartographie de vitesse dans des conditions standards, c'est-à-dire à pente nulle, les entrées sont des signaux issus de capteurs ou des conditions standard de trajet telles que la pente ou la vitesse, et les sorties sont des consommations énergétiques. On précise ici que l'étape d'analyse des dépenses énergétiques peut mettre en œuvre une comparaison avec un ou plusieurs modèles simulant diverses conditions de trajet.

Ainsi, il est possible de suivre la consommation énergétique d'un véhicule ou d'une flotte de véhicule de manière aisée. De plus, les calculs des dépenses énergétiques sont réalisés au plus près du véhicule, permettant un bilan énergétique particulièrement fiable et précis.

Lors de l'analyse des dépenses énergétiques, on analyse les forces résistives en comparant les dépenses énergétiques calculées avec au moins un modèle d'un véhicule, fourni par une base de données, simulant le même trajet dans des conditions standards, c'est-à-dire sans pente, et on analyse la consommation de carburant en comparant la consommation de carburant mesurée avec une estimation de la consommation de carburant issue dudit modèle du véhicule.

Préalablement au calcul des dépenses énergétiques du véhicule, on récupère des données provenant du réseau de communication, compris dans le groupe comprenant le volume de carburant injecté le couple indiqué du moteur thermique, le régime moteur, le couple de frottement mécanique du moteur thermique, la vitesse du véhicule, le rapport de la boite de vitesses engagé, la pente de la route, l'accélération longitudinale du véhicule, la position de la pédale de frein et le couple du ralentisseur. On peut également récupérer des données à partir d'une base de données de paramètres du véhicule hébergés dans un calculateur du véhicule automobile ou sur un serveur distant, les paramètres étant compris dans le groupe comprenant le rayon des roues, la masse du véhicule, la masse équivalente des éléments roulants, le coefficient de résistance au roulement des pneumatiques, la masse volumique de l'air du véhicule, la surface frontale du véhicule, le coefficient de trainée, le pouvoir calorifique inférieur, la masse volumique du carburant, le rapport de pont, l'efficacité de la boite de vitesses, l'efficacité de la transmission, l'inertie de l'arbre primaire et l'inertie des éléments roulants du moteur. Dans un autre exemple, les paramètres peuvent également être compris dans le groupe comprenant, le régime moteur au ralenti, la puissance moyenne approximée par les éléments auxiliaires, une cartographie de consommation et une cartographie des limites physiques du moteur.

Lors de l'étape de calcul des dépenses énergétiques :

- on calcule l'énergie produite par la combustion du carburant en fonction du pouvoir calorifique inférieur, du volume de carburant injecté et de la masse volumique du carburant,
- on calcule l'énergie mécanique indiquée en fonction du couple indiqué du moteur thermique et du régime moteur,
- on calcule l'énergie liée aux frottements internes du moteur en fonction du couple de frottement mécanique du moteur thermique et du régime moteur,
- on calcule l'énergie dépensée durant les phases de ralenti du moteur en fonction du couple de frottement mécanique du moteur thermique, du régime moteur, et du régime moteur au ralenti
- on calcule l'énergie dépensée par les éléments auxiliaires en fonction de la puissance moyenne approximée par les éléments auxiliaires,
- on calcule l'énergie mécanique en sortie de l'arbre moteur en fonction du couple indiqué du moteur thermique, de la vitesse du véhicule, du couple de frottement mécanique du moteur thermique, et du rapport de la boite de vitesses engagé,
- on calcule les énergies mécaniques ramenées à la roue en fonction de l'énergie mécanique en sortie de l'arbre moteur, du rayon des roues, du rapport de pont, et du rapport de la boite de vitesses engagé, de l'efficacité de la boite de vitesses, et de l'efficacité de la transmission,
- on calcule l'énergie potentielle en fonction de la masse du véhicule, de la vitesse du véhicule, et de la pente de la route,
- on calcule l'énergie cinétique en fonction de la vitesse du véhicule, de l'accélération longitudinale du véhicule, de la masse du véhicule, de la masse équivalente des éléments roulants, du rapport de pont, de l'efficacité de la boite de vitesses, de l'efficacité de la transmission, de l'inertie de l'arbre primaire et de l'inertie des éléments roulants du moteur, du rapport de la boite de vitesses engagé, et du rayon des roues,
- on calcule l'énergie liée à l'aérodynamique du véhicule en fonction de la masse volumique de l'air du véhicule, de la surface frontale du véhicule, du coefficient de trainée, et de la vitesse du véhicule, et
- on calcule l'énergie liée à la résistance au roulement en fonction de la masse du véhicule, du coefficient de résistance au roulement des pneumatiques et de la pente de la route.

Par exemple, lors de l'analyse des forces résistives, on calcule l'énergie mesurée liée aux forces résistives en fonction de l'énergie mécanique en sortie de l'arbre moteur, de l'énergie cinétique et de l'énergie potentielle, on calcule l'énergie modélisée liée aux forces résistives en fonction de l'énergie liée à l'aérodynamique et de l'énergie liée à la résistance au roulement et on compare lesdites énergies liées aux forces résistives.

Selon un mode de réalisation, lors de l'analyse de la consommation de carburant, on calcule une première quantité de carburant injecté en fonction du régime moteur et d'une cartographie de consommation.

Selon un mode de réalisation, lors de l'analyse de la consommation de carburant, on calcule une deuxième quantité de carburant injecté en fonction du profil de vitesse et du profil de pente et d'une cartographie du moteur permettant de relier le régime moteur au le couple effectif.

Selon un mode de réalisation, lors de l'analyse de la consommation de carburant, on calcule une troisième quantité de carburant injecté en fonction du profil de vitesse et du profil de pente dans des conditions standards où la pente est nulle et une quatrième quantité de carburant injecté en fonction du profil de vitesse et du profil de pente dans des conditions standards où la pente est nulle, et sur un modèle de véhicule simulant le même trajet dans des conditions standards où la pente est nulle et on compare lesdites troisième et quatrième quantités de carburant avec lesdites première et deuxième quantités de carburant.

Selon un mode de réalisation, les dépenses énergétiques sont calculées seulement si la position de la pédale de frein et le couple du ralentisseur sont nuls et aucun changement de rapport n'est en cours.

Selon un deuxième aspect, l'invention concerne un dispositif d'analyse de la répartition des dépenses énergétiques d'un véhicule automobile à partir de données d'un réseau de communication et de paramètres du véhicule, comprenant un module d'élaboration d'un bilan énergétique d'un véhicule automobile sur un trajet et un module de communication dudit bilan énergétique à un serveur externe, ledit module d'élaboration d'un bilan énergétique comprenant un module de calcul des dépenses énergétiques du véhicule sur un trajet, c'est à dire les énergies à différentes étapes de la chaine de traction afin d'en déduire une répartition des dépenses énergétiques du véhicule et un module d'analyse des dépenses énergétiques du véhicule déterminées par le module de calcul des dépenses énergétiques, par comparaison avec un modèle du véhicule simulant le même trajet.

Le dispositif comprend un module de traitement de données recevant en entrée des données provenant du réseau de communication, comprises dans le groupe comprenant le volume de carburant injecté le couple indiqué du moteur thermique, le régime moteur, le couple de frottement mécanique du moteur thermique, la vitesse du véhicule, le rapport de la boite de vitesses engagé, la pente de la route, l'accélération longitudinale du véhicule, la position de la pédale de frein et le couple du ralentisseur, ainsi que des données à partir d'une base de données de paramètres du véhicule hébergés dans un calculateur du véhicule automobile ou sur un serveur distant, les paramètres étant compris dans le groupe comprenant le rayon des roues, la masse du véhicule, la masse équivalente des éléments roulants, le coefficient de résistance au roulement des pneumatiques, la masse volumique de l'air du véhicule, la surface frontale du véhicule, le coefficient de trainée, le pouvoir calorifique inférieur, la masse volumique du carburant, le rapport de pont, l'efficacité de la boite de vitesses, l'efficacité de la transmission, l'inertie de l'arbre primaire et l'inertie des éléments roulants du moteur, et trois constantes de calibration comprenant le régime moteur au ralenti, la puissance moyenne approximée par les éléments auxiliaires, une cartographie de consommation et une cartographie des limites physiques du moteur.

Le module de calcul des dépenses énergétiques du véhicule sur un trajet est configuré pour calculer :

- l'énergie produite par la combustion du carburant en fonction du pouvoir calorifique inférieur, du volume de carburant injecté et de la masse volumique du carburant,
- l'énergie mécanique indiquée en fonction du couple indiqué du moteur thermique et du régime moteur,
- l'énergie liée aux frottements internes du moteur en fonction du couple de frottement mécanique du moteur thermique et du régime moteur,
- l'énergie dépensée durant les phases de ralenti du moteur en fonction du couple de frottement mécanique du moteur thermique, du régime moteur, et du régime moteur au ralenti,
- l'énergie dépensée par les éléments auxiliaires en fonction de la puissance moyenne approximée par les éléments auxiliaires,
- l'énergie mécanique en sortie de l'arbre moteur en fonction du couple indiqué du moteur thermique, de la vitesse du véhicule, du couple de frottement mécanique du moteur thermique, et du rapport de la boite de vitesses engagé,
- les énergies mécaniques ramenées à la roue en fonction de l'énergie mécanique en sortie de l'arbre moteur, du rayon des roues, du rapport de pont, de l'efficacité de la boite de vitesses, et de l'efficacité de la transmission,
- l'énergie potentielle en fonction de la masse du véhicule, de la vitesse du véhicule, et de la pente de la route,
- l'énergie cinétique en fonction de la vitesse du véhicule, de l'accélération longitudinale du véhicule, de la masse du véhicule, de la masse équivalente des éléments roulants, du rapport de pont, de l'efficacité de la boite de vitesses, de l'efficacité de la transmission, de l'inertie de l'arbre primaire, de l'inertie des éléments roulants du moteur, du rapport de la boite de vitesses engagé et du rayon des roues,
- l'énergie liée à l'aérodynamique du véhicule en fonction de la masse volumique de l'air du véhicule, de la surface frontale du véhicule, du coefficient de trainée, et de la vitesse du véhicule, et
- l'énergie liée à la résistance au roulement en fonction de la masse du véhicule, du coefficient de résistance au roulement des pneumatiques et de la pente de la route.

Le module d'analyse des dépenses énergétiques du véhicule comprend un module d'analyse des forces résistives comparant les dépenses énergétiques calculées avec un modèle du véhicule, fourni par une base de données, simulant le même trajet dans des conditions standards de pente nulle, et un module d'analyse de la consommation de carburant en comparant la consommation mesurée avec une estimation de la consommation de carburant issue dudit modèle du véhicule.

D'autres buts, caractéristiques et avantages de l'invention apparaîtront à la lecture de la description suivante, donnée uniquement à titre d'exemple non limitatif, et faite en référence aux dessins annexés sur lesquels :

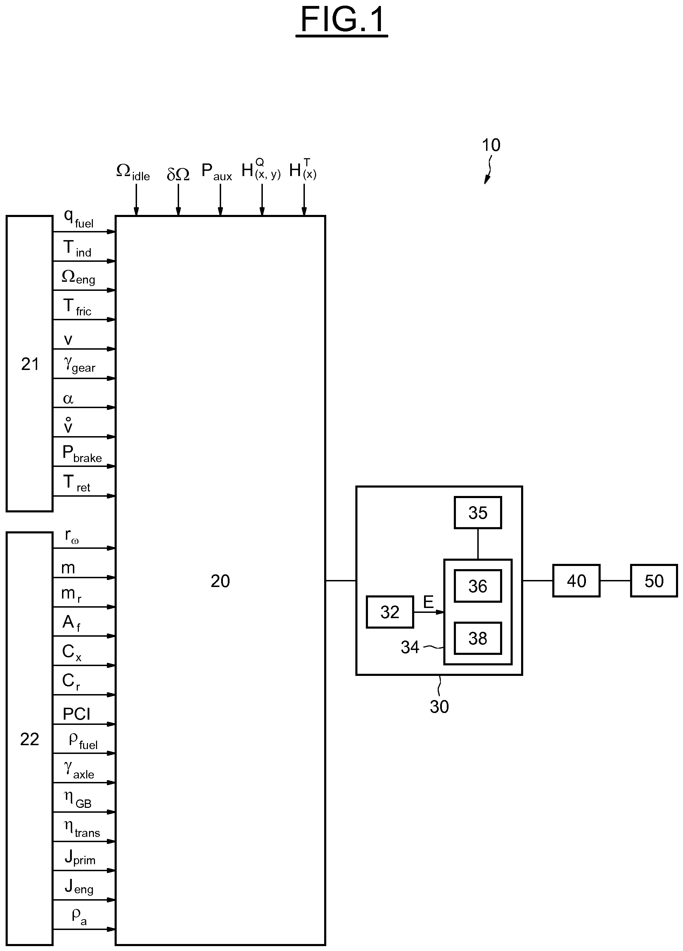

- la figure 1 représente schématiquement le dispositif d'analyse de la répartition des dépenses énergétiques d'un véhicule selon l'invention; et
- la figure 2 illustre les étapes du procédé d'analyse de la répartition des dépenses énergétiques d'un véhicule selon l'invention.

Un dispositif 10 d'analyse de la répartition des dépenses énergétiques d'un véhicule automobile comprend un module 20 de traitement des données, un module 30 d'élaboration d'un bilan énergétique du véhicule automobile, un module 40 de détection de la fin de trajet et un module 50 de communication du bilan énergétique à un serveur (non représenté), par exemple extérieur au véhicule, par exemple par des moyens télématiques.

Le module 20 de traitement des données reçoit en entrée des données provenant d'un réseau de communication 21 bien connu de l'homme du métier sous l'acronyme anglo-saxon « CAN : Controller Area Network ». Les données transmises par le réseau CAN comprennent le volume de carburant injecté $q_{fuel}$, le couple indiqué du moteur thermique $T_{ind}$, le régime moteur $\Omega_{eng}$, le couple de frottement mécanique du moteur thermique $T_{fric}$, la vitesse du véhicule v, le rapport de la boite de vitesses engagé $\gamma_{gear}$, la pente locale de la route $\alpha$, l' longitudinale du véhicule $\dot{v}$, la position de la pédale de frein $P_{brake}$ et le couple du ralentisseur $T_{ret}$.

Le module 20 de traitement des données reçoit également des paramètres du véhiculé issu d'une base de données 22 de paramètres du véhicule hébergés dans un calculateur (non représenté) du véhicule automobile ou sur un serveur distant. Les paramètres du véhicule transmis au module 20 de traitement comprennent :

- le rayon des roues $r_w$,
- la masse du véhicule m,
- la masse équivalente des éléments roulants $m_r$. Cette masse et obtenue à partir des caractéristiques des composants correspondants. Ainsi, la masse équivalente des roues est obtenue à partir des caractéristiques des roues et pneumatiques et la masse équivalente des inerties de la chaine de traction (moteur, boîte de vitesse, arbre de transmission...) est obtenue à partir des caractéristiques du moteur thermique (cylindrée et nombre de cylindre).
- le coefficient de résistance au roulement des pneumatiques $c_r$. Ce coefficient étant lié aux pneumatiques, il évolue avec le temps. Afin d'obtenir la meilleure précision possible sur l'estimation de la masse, on pourrait prévoir d'estimer ce coefficient par un procédé d'estimation spécifique.
- les coefficients de la résistance aérodynamique, tels que la masse volumique de l'air du véhicule $\rho_a$, la surface frontale du véhicule $A_f$, le coefficient de trainée $c_x$.
- le pouvoir calorifique inférieur PCI, la masse volumique du carburant $\rho_{fuel}$, le rapport de pont $\gamma_{axle}$, l'efficacité de la boite de vitesses $\eta_{GB}$, l'efficacité de la transmission $\eta_{TRANS}$, la constante de la pesanteur g, l'inertie de l'arbre primaire $J_{prim}$ et l'inertie des éléments roulants du moteur $J_{eng}$.

Le module de traitement des données 20 reçoit en outre trois constantes de calibration : le régime moteur au ralenti $\Omega_{idle}$, une constante de seuil d'incertitude autour du régime au ralenti $\delta\Omega$, et une constante représentant la puissance moyenne approximée par les éléments auxiliaires sur un poids lourds $P_{aux}$. Ces constantes sont, par exemple, calibrées en fonction des connaissances de l'homme du métier. Ainsi, la constante $P_{aux}$ est fixée entre 2kW et 6kW, la constante $\Omega_{idle}$ est fixée aux alentours de 600 tr/min, et la constante $\delta\Omega$ est fixée aux alentours de 200 tr/min. Le module de traitement des données 20 reçoit également une cartographie de consommation $H^Q(x,y)$ et une cartographie du moteur permettant de relier le régime moteur au le couple effectif $H^T(x)$.

Enfin, à titre d'exemple non limitatif, le module de traitement des données 20 peut également recevoir en temps réel la position du véhicule sous forme de latitude, de longitude et d'altitude en fonction des données satellitaires reçues par le système de positionnement global (non représenté), afin de déterminer la pente de la route $\alpha$.

Le module 30 d'élaboration d'un bilan énergétique du véhicule comprend un module 32 de calcul des énergies à différentes étapes de la chaine de traction afin d'en déduire une répartition des dépenses énergétiques du véhicule.

Le module 32 de calcul calcule l'énergie $E_{fuel}$ produite par la combustion du carburant, l'énergie $E_{ind}$ mécanique indiquée, l'énergie $E_{fric}$ liée aux frottements internes du moteur, l'énergie $E_{idle}$ dépensée durant les phases de ralenti du moteur, l'énergie $E_{aux}$ dépensée par les éléments auxiliaires, l'énergie $E_{pwt}^{+,wo/losses}$ mécanique en sortie de l'arbre moteur, les énergies $E_{pwt}^{+,w/losses}$ et $E_{pwt}^{-,w/losses}$ mécaniques ramenées à la roue, l'énergie $E_g$ potentielle, l'énergie $E_{inertia}$ cinétique, l'énergie $E_{aero}^{wo/wind}$ liée à l'aérodynamique du véhicule et l'énergie $E_r$ liée à la résistance au roulement. L'exposant « wo/wind » est une abréviation de l'expression « without wind » en termes anglo-saxons, c'est-à-dire que l'implémentation des équations se fait sans la présence d'un capteur de vent.

L'énergie $E_{fuel}$ produite par la combustion du carburant s'écrit selon l'équation suivante

$$Efuel = PCI.\rho fuel \int_0^{Tend} qfuel(t).\,dt$$

(Eq. 1)

Avec :

PCI, le pouvoir calorifique inférieur, ou « lower heating value » en termes anglo-saxons, correspondant à la quantité de chaleur dégagée par la combustion complète d'une unité de combustible, exprimé en MJ/kg ;

$\rho_{fuel}$, la masse volumique du carburant, exprimée en kg/L ;

$q_{fuel}$, le volume de carburant injecté, exprimée en L/s ; et

$Tend$, la fin du calcul de la répartition des dépenses énergétiques.

L'énergie mécanique indiquée $E_{ind}$ s'écrit selon l'équation suivante:

$$Eind = \int_0^{Tend} Tind(t).\Omega eng(t).dt \qquad \text{(Eq. 2)}$$

Avec :

$T_{ind}$, le couple indiqué du moteur thermique, exprimé en N.m ; et
$\Omega_{eng}$, le régime moteur, exprimé en rad.s$^{-1}$.

L'énergie $E_{fric}$ liée aux frottements internes du moteur s'écrit selon l'équation suivante:

$$Efric = \int_0^{Tend} Tfric(t).\Omega eng(t).dt \qquad \text{(Eq. 3)}$$

Avec :
$T_{fric}$, le couple de frottement mécanique du moteur thermique, exprimé en N.m.

Afin de ne pas comptabiliser deux fois l'énergie liée aux frottements internes du moteur, il est souhaitable de distinguer l'énergie $E_{frix}^{w/idle}$ liée aux frottements internes du moteur lors des phases de ralenti du moteur et l'énergie $E_{frix}^{wo/idle}$ liée aux frottements internes du moteur lors des phases de ralenti du moteur en dehors des phases de ralenti du moteur :

$$E_{frix}^{w/idle} = \int_0^{Tend} Tfric(t).\Omega_{eng}(t).dt.s.t.\left|\Omega_{eng} - \Omega_{idle}\right| < \delta\Omega \qquad \text{(Eq. 4)}$$

Lorsque $|\Omega eng - \Omega idle| < \delta\Omega$

$$E_{frix}^{wo/idle} = \int_0^{Tend} Tfric(t).\Omega_{eng}(t).dt \qquad \text{(Eq. 5)}$$

Lorsque $|\Omega eng - \Omega idle| \geq \delta\Omega$
Avec :

$\Omega_{idle}$, le régime moteur au ralenti, exprimé en rad.s$^{-1}$ ; et
$\delta\Omega$, une constante de seuil d'incertitude autour du régime au ralenti, exprimé en rad.s$^{-1}$.

L'énergie $E_{idle}$ dépensée durant les phases de ralenti du moteur s'écrit selon l'équation Eq. 4:

$$E_{idle} = E_{frix}^{w/idle} = \int_0^{Tend} Tfric(t).\Omega_{eng}(t).dt$$

L'énergie $E_{aux}$ dépensée par les éléments auxiliaires s'écrit selon l'équation suivante:

$$Eaux = Paux \int_{0}^{Tend} t.dt$$

(Eq. 6)

Avec :

$P_{aux}$, une constante représentant la puissance moyenne approximée par les éléments auxiliaires sur un poids lourds, donnée par une base de données, exprimée en kW.

La puissance moyenne $P_{aux}$ se décompose en puissance auxiliaire nécessaire à la traction du véhicule, notamment du compresseur d'air, de la direction assistée, de l'alternateur, en puissance auxiliaire liée au confort, notamment la climatisation, le chauffage... et en puissance auxiliaire spécifique aux systèmes des prise de puissance, notamment lorsque le véhicule est à l'arrêt.

L'énergie mécanique à la roue $E_{pwt}^{+,wo/losses}$ correspond à l'énergie du groupe motopropulseur, s'écrit selon l'équation suivante:

$$E_{pwt}^{+,wo/losses} = \frac{\gamma_{axle}}{r_w} \int_{0}^{Tend} (T_{ind}(t) - T_{fric}(t)).v(t).\gamma_{gear}(t).dt$$

(Eq. 7)

Lorsque $Tind(t) > 0$
Avec :

$\gamma_{axle}$, le rapport de pont, sans unités ;
$r_w$, le rayon de la roue, exprimé en m ;
$v$, la vitesse du véhicule, exprimée en m.s$^{-1}$ ;
$\gamma_{gear}$, le rapport de la boite de vitesses engagé, sans unités.

Les énergies mécaniques $E_{pwt}^{+,w/losses}$ et $E_{pwt}^{-,w/losses}$ ramenées à la roue, s'écrivent selon les équations suivantes:

$$E_{pwt}^{+,w/losses} = \eta_{GB}.\eta_{Trans}.E_{pwt}^{+,wo/losses}$$

(Eq. 8)

$$E_{pwt}^{-,w/losses} = \frac{1}{\eta_{GB}\eta_{Trans}}.E_{pwt}^{+,wo/losses}$$

(Eq. 9)

Avec :

$\eta_{GB}$, l'efficacité de la boite de vitesses, sans unités ; et
$\eta_{TRANS}$, l'efficacité de la transmission, sans unités.

L'énergie $E_g$ potentielle s'écrit selon l'équation suivante:

$$Eg = m.g. \int_{0}^{Tend} v(t).sin(\alpha(t)).dt$$

(Eq. 10)

Avec :

$m$, la masse du véhicule, exprimée en kg ;
$g$, la constante de pesanteur, exprimée en N/kg ; et

$\alpha$, la pente de la route, exprimée en rad.

Il pourrait également être intéressant de déterminer l'énergie potentielle positive emmagasinée lors du trajet :

$$E_g^+ = \int_0^{Tend} v(t).Fg(t).dt \qquad \text{(Eq. 11)}$$

Lorsque $sin(\alpha(t)) > 0$
La force induite par la gravité $F_g(t)$ est déterminé dans la suite de la description à l'équation Eq.20.
L'énergie $E_{inertia}$ cinétique s'écrit selon l'équation suivante:

$$Einertia = E_{inertia}^v + E_{inertia}^{eng} \qquad \text{(Eq. 12)}$$

Où :

$$E_{inertia}^v = (m + mr).\int_0^{Tend} \dot{v}(t).v(t).dt \ \text{ lorsque } \boldsymbol{v(t) > v0} \qquad \text{(Eq. 13)}$$

$$E_{inertia}^{eng} = \frac{\eta eng.\eta Trans.(Jprim+Jeng).\gamma_{axle}^2}{r_w^2}\int_0^{Tend} \dot{v}(t).v(t).\gamma_{gear}^2 dt$$
$$\text{lorsque } \boldsymbol{v(t) > v0} \qquad \text{(Eq. 14)}$$

Avec :

$m_r$, la masse équivalente des éléments roulants, exprimée en kg ;
$\dot{v}$, l'accélération longitudinale du véhicule, exprimée en m.s$^{-2}$;
$J_{prim}$, l'inertie de l'arbre primaire, exprimée en kg.m$^2$ ;
$J_{eng}$, l'inertie des éléments roulants du moteur, exprimée en kg.m$^2$ ; et
$\boldsymbol{v0}$, une constante de seuil afin de ne pas considérer les très faibles vitesses, $\boldsymbol{v0}$ est, par exemple, égal à lkm/h.

L'énergie $E_{aero}^{w/wind}$ liée à l'aérodynamique du véhicule s'écrit selon l'équation suivante:

$$E_{aero}^{w/wind} = \frac{1}{2}.\rho a.Af.cx.\int_0^{Tend}(v(t) - vwind(t))^2.v(t).dt \qquad \text{(Eq. 15)}$$

Avec :

$\rho_a$, la masse volumique de l'air, exprimée en kg.m$^{-3}$ ;
$A_f$, la surface frontale du véhicule, exprimée en m$^2$;
$c_x$, le coefficient de trainée, sans unités ; et
$v_{wind}$, la vitesse du vent, exprimée en m.s-1.

La vitesse du vent est une information qui n'est pas toujours disponible au niveau du véhicule. Dans un exemple de réalisation, cette vitesse du vent est obtenue par des moyens externes non détaillés ici, et qui ne font pas partie de la présente invention.
Toutefois, la vitesse du vent $v_{wind}$ peut être négligée, notamment dans le cas où l'information n'est pas disponible, et dans ce cas, l'équation Eq. 15 s'écrit :

$$E_{aero}^{w/wind} = \frac{1}{2}.\rho a.Af.cx.\int_0^{Tend} v^3(t).dt$$

L'énergie $E_r$ liée à la résistance au roulement s'écrit selon l'équation suivante:

$$E_r = cr.m.\int_0^{Tend} v(t).cos(\alpha(t)).dt$$
(Eq. 16)

Avec :

$c_r$, le coefficient de résistance au roulement des pneumatiques, sans unités.

Le module 30 d'élaboration d'un bilan énergétique du véhicule comprend en outre un module 34 d'analyse des dépenses énergétiques du véhicule déterminées par le module 32 de calcul des énergies.

Le module 34 d'analyse des dépenses énergétiques comprend un module 36 d'analyse des forces résistives comparant les flux énergétiques calculés aux équations 1 à 16 avec un modèle physique du véhicule, fourni par une base de données 35, simulant le même trajet. On peut se référer aux équations ci-dessous 25 à 32 pour les modèles dynamiques de consommations des véhicules.

L'équation de la dynamique du véhicule qui relie les efforts agissants sur le véhicule à la masse du véhicule permet d'obtenir l'équation Eq.17 :

$$(mv + mr).\dot{v}(t) = Ft(t) - Fext(t) - Fdist(t)$$
(Eq. 17)

Avec :

$m_v$, la masse du véhicule, exprimée en kg ;

$m_r$, la masse équivalente des éléments roulants, exprimée en kg ;

$\dot{v}$, l'accélération longitudinale du véhicule, exprimée en m.s$^{-2}$ ;

$F_t(t)$, la force de traction appliquée sur le véhicule, exprimée en N ;

$F_{ext}(t)$, les forces extérieures appliquées sur le véhicule, exprimées en N ; et

$F_{dist}(t)$, la force liée aux erreurs de modélisation.

L'ensemble des forces extérieures $F_{ext}(t)$ appliquées sur le véhicule regroupe la force de frottement aérodynamique $F_a(t)$, la force de résistance au roulement $F_r(t)$ et la force induite par la gravité $F_g(t)$.

La force de frottement aérodynamique $F_a(t)$ dépend de la masse volumique de l'air du véhicule $\rho_a$, de la surface frontale du véhicule $A_f$, du coefficient de trainée $c_x$ et de la vitesse relative d'avancement du véhicule par rapport à l'air ($v-v_{wind}$). La force de frottement aérodynamique $Fa(t)$ s'écrit selon l'équation suivante :

$$Fa(v) = \frac{1}{2}.\rho a.Af.cx.(v - vwind)^2 \qquad \text{(Eq. 18)}$$

La vitesse relative du vent $v_{wind}$ n'est pas connue, pour calculer l'équation Eq.3, on fait l'hypothèse que cette vitesse est négligeable, dans la mesure où elle n'a pas d'impact sur la précision de l'analyse des dépenses énergétiques.

La force de résistance au roulement $F_r(t)$ dépend de la masse du véhicule $m_v$, du coefficient de résistance au roulement des pneumatiques $c_r$ et de la pente de la route $\alpha$ comme décrit dans l'équation suivante :

$$Fr(v) = cr.mv.cos(\alpha) \qquad \text{(Eq. 19)}$$

La force induite par la gravité $F_g(t)$ dépend de la masse du véhicule $m_v$, de la constante de pesanteur g et de la pente de la route $\alpha$ comme décrit dans l'équation suivante :

$$Fg(\alpha) = mv.\, g.\, sin(\alpha) \qquad \text{(Eq. 20)}$$

Du point de vue énergétique, l'équation Eq.17 s'écrit :

$$E_{pwt} - Einertia - Eg = Er + E_{aero}^{w/wind} \qquad \text{(Eq.21)}$$

Le couple de freinage et le couple du ralentisseur n'étant pas disponibles, on calcule les énergies uniquement lorsque le couple moteur est positif, c'est à dire à la condition suivante :

$$T^+(t) = [v(t) > v0; Tind(t) > 1, Pbrake(t) = 0; \gamma gear(t) > 0{,}1; Tret(t) = 0]$$

Avec :

$P_{brake}$, la position de la pédale de frein, sans unités ; et
$T_{ret}$, le couple du ralentisseur, exprimé en %.

Ainsi, on en déduit l'équation suivante :

$$E_{pwt}^{+}{}^{T^+} - Einertia^{T^+} - Eg^{T^+} = Er^{T^+} + E_{aero}^{w/wind}{}^{T^+} \qquad \text{(Eq.22)}$$

L'énergie $E_{meas}^{res}$ mesurée liées aux forces résistives s'écrit selon l'équation suivante :

$$E_{meas}^{res} = E_{pwt}^{+}{}^{T^+} - Einertia^{T^+} - Eg^{T^+} \qquad \text{(Eq.23)}$$

L'énergie $E_{model}^{res}$ modélisée liées aux forces résistives s'écrit selon l'équation suivante :

$$E_{model}^{res} = Er^{T^+} + E_{aero}^{w/wind}{}^{T^+} \qquad \text{(Eq.24)}$$

Le module 36 d'analyse des forces résistives compare l'énergie mesurée et celle provenant du modèle : $E_{meas}^{res} - E_{model}^{res}$.

Si les deux énergies sont égales : $E_{meas}^{res} = E_{model}^{res}$, cela signifie que le modèle reproduit correctement les mesures. Cela indique également que l'influence du vent $v_{wind}$ est faible.

Si $E_{meas}^{res} > E_{model}^{res}$, les forces résistives ont en réalité été plus importantes que ce que le modèle avait calculé. Ceci peut s'expliquer par le fait que l'une des constantes $C_x$ ou $C_r$ est plus élevée que la valeur indiquée dans le modèle ou que le vent sur le trajet a été d'amplitude notable sans être compensé sur l'ensemble du trajet.

Si $E_{meas}^{res} < E_{model}^{res}$, les forces résistives ont en réalité été moins importantes que ce que le modèle avait calculé. Ceci peut s'expliquer par le fait que l'une des constantes $C_x$ ou $C_r$ est plus faible que la valeur indiquée dans le modèle.

Différentes sources d'erreur peuvent être présentes lors du calcul de la décomposition énergétique, notamment des retards sur les mesures provenant de divers capteurs ou des erreurs inhérentes liées à la modélisation du véhicule. Il est ainsi préférable d'analyser la répartition des dépenses énergétiques sur une pluralité de trajets.

On précise d'ailleurs qu'une fois le bilan énergétique effectué et communiqué à un serveur externe, il est possible d'analyser non pas la valeur absolue de la différence entre l'énergie modélisée et l'énergie mesurée, mais son évolution d'un trajet à l'autre, l'analyse étant effectuée avec un même modèle sur la pluralité de trajets.

En complément de l'analyse des forces résistives permettant la validation des paramètres du véhicule est complétée par une analyse de la consommation de carburant.

Le module 34 d'analyse des dépenses énergétiques comprend à cet effet un module 38 d'analyse de la consommation de carburant en comparant la consommation mesurée avec des consommations provenant de divers modèles issus de bases de données simulant le même trajet dans des conditions standards. On peut se référer aux équations ci-dessous 25 à 32 pour les modèles dynamiques de consommations des véhicules.

Ainsi, il est possible de normaliser le trajet ainsi que le véhicule afin de pouvoir ensuite comparer les performances de plusieurs véhicules et des classer en fonction de leur consommation de carburant sur un usage standard.

Le module 38 d'analyse de la consommation de carburant calcule de la quantité $Q_{eng}$ de carburant injecté à partir du régime moteur et d'une cartographie de consommation $H^Q(x,y)$ :

$$Q_{eng} = \frac{1}{\rho} \int_0^{Tend} \Omega eng(t).H^Q(\Omega eng(t),(Tind(t) - Tfric(t)).dt$$

(Eq. 25)

Lorsque $\Omega eng(t) > 200\frac{\pi}{180}$ Avec :

$H^Q(x,y)$, une cartographie du moteur permettant de relier le régime moteur et le couple effectif à une quantité de carburant injectée.

Le module 38 d'analyse de la consommation de carburant calcule également la quantité $Q_f$ de carburant injecté à partir du profil de vitesse et du profil de pente:

$$Q_f = \frac{1}{\rho} \int_0^{Tend} \Omega eng(t).H^Q(\Omega eng(t),h(t)).dt$$

(Eq. 26)

Lorsque $\Omega eng(t) > 200\frac{\pi}{180}$ Avec :

$$h(t) = Sat_{\underline{Te}}^{\overline{Te}}.(\frac{rw}{\gamma gear \lambda axle}(Finertia + Fr + Faero + Fg)) \quad \text{(Eq. 27)}$$

$$\overline{Te} = max(H^T.(\Omega eng(t))) \quad \text{(Eq. 28)}$$

$$\underline{Te} = min(H^T.(\Omega eng(t))) \quad \text{(Eq. 29)}$$

$H^T(x)$, une cartographie du moteur permettant de relier le régime moteur au le couple effectif.

Le module d'analyse de la consommation de carburant calcule ensuite la quantité $Q_{f,sd}$ de carburant injecté à partir du profil de vitesse et du profil de pente dans des conditions standards, c'est-à-dire α=0:

$$Q_f, sd = \frac{1}{\rho} \int_0^{Tend} \Omega eng(t).H^Q(\Omega eng(t), hsd(t)).dt \qquad \text{(Eq. 30)}$$

Lorsque $\Omega eng(t) > 200\frac{\pi}{180}$ Avec :

$$hsd(t) = Sat_{\underline{Te}}^{\overline{Te}}.(\frac{rw}{\gamma gear \lambda axle}(Finertia + Fr + Faero))$$
(Eq. 31)

Le module d'analyse de la consommation de carburant calcule également la quantité $Q_{f,v,sd}$ de carburant injecté à partir du profil de vitesse et du profil de pente dans des conditions standards, et sur un véhicule normalisé c'est-à-dire $\alpha=0$:

$$Q_f, v, sd = \frac{1}{\rho} \int_0^{Tend} \Omega eng(t).H^Q(\Omega eng(t), hv, sd(t)).dt$$
(Eq. 32)

Lorsque $\Omega eng(t) > 200\frac{\pi}{180}$ Avec :

$$hv, sd(t) = Sat_{\underline{Te}}^{\overline{Te}}.(\frac{rw}{\gamma gear \lambda axle}((Finertia + Fr).\frac{m0}{m} + Faero))$$
(Eq. 33)

m, la masse du véhicule ; et

$m_0$, la masse du véhicule normalisé. On considère ici un véhicule de masse constante, tel que par exemple un véhicule de 18T, afin de comparer sur un trajet similaire deux véhicule de masses différentes par rapport à une référence similaire.

Les consommations de carburant calculées aux équations Eq.25 à Eq. 32 sont ensuite comparées entre elles afin de déterminer si la consommation du véhicule est normale.

Lors de toutes les opérations de calcul, l'occurrence de changement de rapport doit être nulle.

Une fois le bilan énergétique élaboré, et la fin de trajet détectée, il est transmis à un serveur extérieur par des moyens télématiques.

Il est ainsi possible de regrouper sur plusieurs trajets, pour un même véhicule le bilan énergétique élaboré à chaque trajet et de vérifier, de manière fiable, la performance du véhicule.

Il est également possible de regrouper sur plusieurs trajets, pour une pluralité de véhicules automobiles, les bilans énergétiques, afin de déceler, au sein d'une même flotte, les véhicules automobiles ayant une consommation de carburant élevée, ainsi que les trajets qui nécessitent une consommation de carburant élevée, par exemple à cause du dénivelé, ou d'une forte présence de vent.

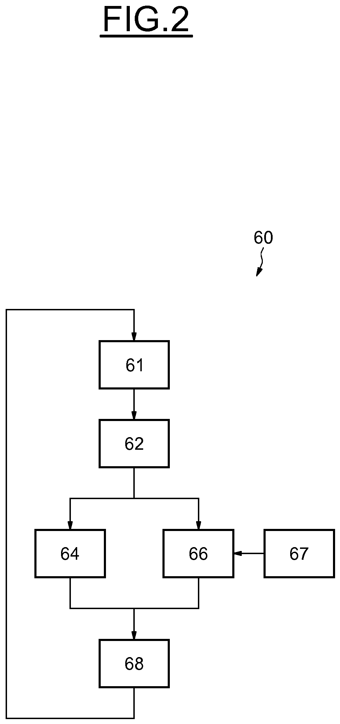

L'organigramme représenté sur la figure 2 illustre le procédé 60 d'analyse de la répartition énergétique d'un véhicule automobile.

Lors d'une première étape 61, on récupère les données comprenant : le volume de carburant injecté $q_{fuel}$, le couple indiqué du moteur thermique $T_{ind}$, le régime moteur $\Omega_{eng}$, le couple de frottement mécanique du moteur thermique $T_{fric}$, la vitesse du véhicule v, le rapport de la boite de vitesses engagé $\gamma_{gear}$, la pente de la route $\alpha$, l'accélération longitudinale du véhicule $\dot{v}$, la position de la pédale de frein $P_{brake}$ et le couple du ralentisseur $T_{ret}$, le rayon des roues $r_w$, la masse du véhicule m, la masse équivalente des éléments roulants $m_r$, le coefficient de résistance au roulement des pneumatiques $c_r$, les coefficients de la résistance aérodynamique, tels que la masse volumique de l'air du véhicule $\rho_a$, la surface frontale du véhicule $A_f$, le coefficient de trainée $c_x$, le pouvoir calorifique inférieur PCI, la masse volumique du carburant $\rho_{fuel}$, le rapport de pont $\gamma_{axle}$, l'efficacité de la boite de vitesses $\eta_{GB}$, l'efficacité de la transmission $\eta_{TRANS}$, l'inertie de l'arbre primaire $J_{prim}$ et l'inertie des éléments roulants du moteur $J_{eng}$.

On récupère également trois constantes de calibration : le régime moteur au ralenti $\Omega_{idle}$, une constante de seuil d'incertitude autour du régime au ralenti $\delta\Omega$, et une constante représentant la puissance moyenne approximée par les éléments auxiliaires sur un poids lourds $P_{aux}$, ainsi qu'une cartographie de consommation $H^Q(x,y)$ et une cartographie du moteur permettant de relier le régime moteur au le couple effectif $H^T$ (x).

A titre d'exemple non limitatif, on peut récupérer également, en temps réel, la position du véhicule sous forme de latitude, de longitude et d'altitude en fonction des données satellitaires reçues par le système de positionnement global GPS (non représenté), afin de déterminer la pente de la route $\alpha$.

Lors d'une deuxième étape 62, on calcule les énergies suivantes : l'énergie $E_{fuel}$ produite par la combustion du carburant, l'énergie $E_{ind}$ mécanique indiquée, l'énergie $E_{fric}$ liée aux frottements internes du moteur, l'énergie $E_{idle}$ dépensée durant les phases de ralenti du moteur, l'énergie $E_{aux}$ dépensée par les éléments auxiliaires, l'énergie $E_{pwt}^{+,wo/losses}$ mécanique en sortie de l'arbre moteur, les énergies $E_{pwt}^{+,w/losses}$ et $E_{pwt}^{-,w/losses}$ mécaniques ramenées à la roue, l'énergie $E_g$ potentielle, l'énergie $E_{inertia}$ cinétique, l'énergie $E_{aero}^{wo/wind}$ liée à l'aérodynamique du véhicule et l'énergie $E_r$ liée à la résistance au roulement.

Lors d'une troisième étape 63, on analyse les dépenses énergétiques du véhicule déterminées lors de la deuxième étape 62 en analysant, à l'étape 64, les forces résistives par comparaison des flux énergétiques calculés aux équations 1 à 16 avec un modèle physique du véhicule, et en analysant, à l'étape 66, la consommation de carburant par comparaison entre la consommation de carburant mesurée et des consommations de carburant provenant de modèles 67 issus de bases de données simulant le même trajet dans des conditions standards, c'est-à-dire sans pente. Ainsi, il est possible de normaliser le trajet ainsi que le véhicule afin de pouvoir ensuite comparer les performances de plusieurs véhicules et des classer en fonction de leur consommation de carburant sur un usage standard.

Lors d'une quatrième étape 68, on élabore un bilan énergétique du véhicule indiquant la consommation de carburant, et permettant de détecter une potentielle anomalie entre les mesures et le modèle (présence de vent, écart important du coefficient de trainée...)

Grace à l'invention, il est possible de normaliser le trajet ainsi que le véhicule afin de pouvoir ensuite comparer les performances de plusieurs véhicules et des classer en fonction de leur consommation de carburant sur un usage standard. Il est également possible de s'assurer de la validité des paramètres du modèle véhicule et de classer l'ensemble des véhicules d'une même flotte en fonction de leur consommation de carburant.

## Revendications

1. Procédé d'analyse de la répartition des dépenses énergétiques d'un véhicule automobile à partir de données d'un réseau de communication et de paramètres du véhicule, dans lequel :

   - on calcule les dépenses énergétiques du véhicule sur un trajet,
   - on analyse lesdites dépenses énergétiques par comparaison avec des modèles prédéterminés du véhicule simulant le même trajet,
   - on élabore un bilan énergétique en fonction de l'analyse des dépenses énergétiques et de la consommation de carburant et on communique ledit bilan énergétique à un serveur externe, et dans lequel, préalablement au calcul des dépenses énergétiques du véhicule,
   - on récupère des données provenant du réseau de communication, comprises dans le groupe comprenant le volume de carburant injecté ($q_{fuel}$) le couple indiqué du moteur thermique ($T_{ind}$), le régime moteur ($\Omega_{eng}$), le couple de frottement mécanique du moteur thermique ($T_{fric}$), la vitesse du véhicule (v), le rapport de la boite de vitesses engagé ($\gamma_{gear}$), la pente de la route ($\alpha$), l'accélération longitudinale du véhicule ($\dot{v}$), la position de la pédale de frein *(Pbrake)* et le couple du ralentisseur ($T_{ret}$),
   - on récupère des données à partir d'une base de données de paramètres du véhicule hébergés dans un calculateur du véhicule automobile ou sur un serveur distant, les paramètres étant compris dans le groupe comprenant le rayon des roues ($r_w$), la masse du véhicule ($m$), la masse équivalente des éléments roulants ($m_r$), le coefficient de résistance au roulement des pneumatiques ($c_r$), la masse volumique de l'air du véhicule ($\rho_a$), la surface frontale du véhicule ($A_f$), le coefficient de trainée ($c_x$), le pouvoir calorifique inférieur *(PCI)*, la masse volumique du carburant ($\rho_{fuel}$), le rapport de pont ($\gamma_{axle}$), l'efficacité de la boite de vitesses ($\eta_{GB}$), l'efficacité de la transmission ($\eta_{TRANS}$), l'inertie de l'arbre primaire ($J_{prim}$) et l'inertie des éléments roulants du moteur ($J_{eng}$),
   - on récupère en outre le régime moteur au ralenti ($\Omega_{idle}$), la puissance moyenne approximée par les éléments auxiliaires ($P_{aux}$), une cartographie de consommation ($H^Q(x,y)$) et une cartographie des limites physiques du moteur ($H^T$(x)), **caractérisé en ce que**

lors de l'étape de calcul des dépenses énergétiques,

- on calcule l'énergie ($E_{fuel}$) produite par la combustion du carburant en fonction du pouvoir calorifique inférieur *(PCI)*, du volume de carburant injecté ($q_{fuel}$) et de la masse volumique du carburant ($\rho_{fuel}$),
- on calcule l'énergie ($E_{ind}$) mécanique indiquée en fonction du couple indiqué du moteur thermique *($T_{ind}$)* et du régime moteur *($\Omega_{eng}$)*,
- on calcule l'énergie ($E_{fric}$) liée aux frottements internes du moteur en fonction du couple de frottement mécanique du moteur thermique ($T_{fric}$) et du régime moteur *($\Omega_{eng}$)*,
- on calcule l'énergie ($E_{idle}$) dépensée durant les phases de ralenti du moteur en fonction du couple de frottement mécanique du moteur thermique ($T_{fric}$), du régime moteur *($\Omega_{eng}$)*, et du régime moteur au ralenti ($\Omega_{idle}$),
- on calcule l'énergie ($E_{aux}$) dépensée par les éléments auxiliaires en fonction de la puissance moyenne approximée par les éléments auxiliaires ($P_{aux}$),
- on calcule l'énergie ($E_{pwt}^{+,wo/losses}$) mécanique en sortie de l'arbre moteur en fonction du couple indiqué du moteur thermique *(Tind)*, de la vitesse du véhicule (*v*), du couple de frottement mécanique du moteur thermique ($T_{fric}$), et du rapport de la boite de vitesses engagé ($\gamma_{gear}$)
- on calcule les énergies ($E_{pwt}^{+,w/losses}, E_{pwt}^{-,w/losses}$) mécaniques ramenées à la roue en fonction de l'énergie ($E_{pwt}^{+,wo/losses}$) mécanique en sortie de l'arbre moteur, du rayon des roues ($r_w$), du rapport de pont ($\gamma_{axle}$), de l'efficacité de la boite de vitesses ($\eta_{GB}$), et de l'efficacité de la transmission ($\eta_{TRANS}$),
- on calcule l'énergie ($E_g$) potentielle en fonction de la masse du véhicule (*m*), de la vitesse du véhicule (*v*), et de la pente de la route ($\alpha$),
- on calcule l'énergie ($E_{inertia}$) cinétique en fonction de la vitesse du véhicule (*v*), de l'accélération longitudinale du véhicule ($\dot{v}$), de la masse du véhicule (*m*), de la masse équivalente des éléments roulants ($m_r$), du rapport de pont ($\gamma_{axle}$), de l'efficacité de la boite de vitesses ($\eta_{GB}$), de l'efficacité de la transmission ($\eta_{TRANS}$), de l'inertie de l'arbre primaire ($J_{prim}$), de l'inertie des éléments roulants du moteur ($J_{eng}$), du rapport de la boite de vitesses engagé et du rayon des roues,
- on calcule l'énergie ($E_{aero}^{wo/wind}$) liée à l'aérodynamique du véhicule en fonction de la masse volumique de l'air du véhicule ($\rho_a$), de la surface frontale du véhicule ($A_f$), du coefficient de trainée ($c_x$), et de la vitesse du véhicule (*v*), et
- on calcule l'énergie ($E_r$) liée à la résistance au roulement en fonction de la masse du véhicule (*m*), du coefficient de résistance au roulement des pneumatiques ($c_r$) et de la pente de la route ($\alpha$), et **caractérisé en ce que** lors de l'analyse des dépensées énergétiques, on analyse les forces résistives en comparant les dépenses énergétiques calculées avec un modèle du véhicule, fourni par une base de données, simulant le même trajet dans des conditions standards où la pente est nulle, et on analyse la consommation de carburant en comparant la consommation de carburant mesurée avec une estimation de la consommation de carburant issue dudit modèle du véhicule.

2. Procédé selon la revendication 1, dans lequel lors de l'analyse des forces résistives, on calcule l'énergie ($E_{meas}^{res}$) mesurée liée aux forces résistives en fonction de l'énergie ($E_{pwt}^{+,wo/losses}$) mécanique en sortie de l'arbre moteur, de l'énergie ($E_{inertia}$) cinétique et de l'énergie ($E_g$) potentielle, on calcule l'énergie ($E_{model}^{res}$) modélisée liée aux forces résistives en fonction de l'énergie ($E_{aero}^{wo/wind}$) liée à l'aérodynamique et de l'énergie ($E_r$) liée à la résistance au roulement et on compare lesdites énergies ($E_{meas}^{res}, E_{model}^{res}$) liées aux forces résistives.

3. Procédé selon l'une quelconque des revendications 1 ou 2, dans lequel, lors de l'analyse de la consommation de carburant, on calcule une première quantité ($Q_{eng}$) de carburant injecté en fonction du régime moteur ($\Omega_{eng}$) et d'une cartographie ($H^Q$(x,y)) de consommation.

4. Procédé selon l'une quelconque des revendications 1 à 3, dans lequel, lors de l'analyse de la consommation de carburant, on calcule une deuxième quantité ($Q_f$) de carburant injecté en fonction du profil de vitesse et du profil de pente et d'une cartographie ($H^T(x)$) du moteur permettant de relier le régime moteur au couple effectif.

5. Procédé selon les revendications 3 et 4, dans lequel, lors de l'analyse de la consommation de carburant, on calcule une troisième quantité ($Q_{f,sd}$) de carburant injecté en fonction du profil de vitesse et du profil de pente dans des conditions standards où la pente est nulle et une quatrième quantité ($Q_{f,v,sd}$) de carburant injecté en fonction du profil de vitesse et du profil de pente dans des conditions standards où la pente est nulle, et sur un modèle de véhicule simulant le même trajet dans des conditions standards où la pente est nulle et on compare lesdites troisième et quatrième quantités de carburant avec lesdites première et deuxième quantités de carburant.

6. Procédé selon l'une quelconques des revendications précédentes, dans lequel, les dépenses énergétiques sont calculées seulement si la position de la pédale de frein *(Pbrake)* et le couple du ralentisseur ($T_{ret}$) sont nuls et aucun changement de rapport est en cours.

7. Dispositif d'analyse de la répartition des dépenses énergétiques d'un véhicule automobile à partir de données d'un réseau de communication et de paramètres du véhicule, comprenant un module (30) d'élaboration d'un bilan énergétique d'un véhicule automobile sur un trajet et un module (50) de communication dudit bilan énergétique à un serveur externe, ledit module d'élaboration d'un bilan énergétique comprenant un module (32) de calcul des dépenses énergétiques du véhicule sur un trajet, et un module (34) d'analyse des dépenses énergétiques du véhicule déterminées par le module (32) de calcul des dépenses énergétiques, le dispositif comprenant un module (20) de traitement de données recevant en entrée des données provenant du réseau de communication, comprises dans le groupe comprenant le volume de carburant injecté ($q_{fuel}$) le couple indiqué du moteur thermique ($T_{ind}$), le régime moteur ($\Omega_{eng}$), le couple de frottement mécanique du moteur thermique ($T_{fric}$), la vitesse du véhicule ($v$), le rapport de la boite de vitesses engagé ($\gamma_{gear}$), la pente de la route ($\alpha$), l'accélération longitudinale du véhicule ($\dot{v}$), la position de la pédale de frein *(Pbrake)* et le couple du ralentisseur ($T_{ret}$), ainsi que des données à partir d'une base de données de paramètres du véhicule hébergés dans un calculateur du véhicule automobile ou sur un serveur distant, les paramètres étant compris dans le groupe comprenant le rayon des roues ($r_w$), la masse du véhicule ($m$), la masse équivalente des éléments roulants ($m_r$), le coefficient de résistance au roulement des pneumatiques ($c_r$), la masse volumique de l'air du véhicule ($\rho_a$), la surface frontale du véhicule ($A_f$), le coefficient de trainée ($c_x$), le pouvoir calorifique inférieur *(PCI)*, la masse volumique du carburant ($\rho_{fuel}$), le rapport de pont ($\gamma_{axle}$), l'efficacité de la boite de vitesses ($\eta_{GB}$), l'efficacité de la transmission ($\eta_{TRANS}$), l'inertie de l'arbre primaire ($J_{prim}$) et l'inertie des éléments roulants du moteur ($J_{eng}$), et trois constantes de calibration comprnenat le régime moteur au ralenti ($\Omega_{idle}$), la puissance moyenne approximée par les éléments auxiliaires ($P_{aux}$), une cartographie de consommation ($H^Q(x,y)$) et une cartographie des limites physiques du moteur ($H^T(x)$), **caractérisé en ce que** le module (32) de calcul des dépenses énergétiques du véhicule sur un trajet est configuré pour calculer

- l'énergie ($E_{fuel}$) produite par la combustion du carburant en fonction du pouvoir calorifique inférieur *(PCI)*, du volume de carburant injecté ($q_{fuel}$) et de la masse volumique du carburant ($\rho_{fuel}$),
- l'énergie ($E_{ind}$) mécanique indiquée en fonction du couple indiqué du moteur thermique *($T_{ind}$)* et du régime moteur *($\Omega_{eng}$)*,
- l'énergie ($E_{fric}$) liée aux frottements internes du moteur en fonction du couple de frottement mécanique du moteur thermique ($T_{fric}$) et du régime moteur ($\Omega_{eng}$),
- l'énergie ($E_{idle}$) dépensée durant les phases de ralenti du moteur en fonction du couple de frottement mécanique du moteur thermique ($T_{fric}$), du régime moteur ($\Omega_{eng}$), et du régime moteur au ralenti ($\Omega_{idle}$),
- l'énergie ($E_{aux}$) dépensée par les éléments auxiliaires en fonction de la puissance moyenne approximée par les éléments auxiliaires ($P_{aux}$),
- l'énergie $\left( E_{pwt}^{+,wo/losses} \right)$ mécanique en sortie de l'arbre moteur en fonction du couple indiqué du moteur thermique ($T_{ind}$), de la vitesse du véhicule ($v$), du couple de frottement mécanique du moteur thermique ($T_{fric}$), et du rapport de la boite de vitesses engagé ($\gamma_{gear}$)
- les énergies $\left( E_{pwt}^{+,w/losses}, E_{pwt}^{-,w/losses} \right)$ mécaniques ramenées à la roue en fonction de l'énergie $\left( E_{pwt}^{+,wo/losses} \right)$ mécanique en sortie de l'arbre moteur, du rayon des roues ($r_w$), du rapport de pont ($\gamma_{axle}$), de l'efficacité de la boite de vitesses ($\eta_{GB}$), et de l'efficacité de la transmission ($\eta_{TRANS}$),
- l'énergie ($E_g$) potentielle en fonction de la masse du véhicule ($m$), de la vitesse du véhicule ($v$), et de la pente de la route ($\alpha$),

- l'énergie ($E_{inertia}$) cinétique en fonction de la vitesse du véhicule ($v$), de l'accélération longitudinale du véhicule ($\dot{v}$), de la masse du véhicule ($m$), de la masse équivalente des éléments roulants ($m_r$), du rapport de pont ($\gamma_{axle}$), de l'efficacité de la boite de vitesses ($\eta_{GB}$), de l'efficacité de la transmission ($\eta_{TRANS}$), de l'inertie de l'arbre primaire ($J_{prim}$), de l'inertie des éléments roulants du moteur ($J_{eng}$), du rapport de la boite de vitesses engagé et du rayon des roues,

- l'énergie $\left( E_{aero}^{wo/wind} \right)$ liée à l'aérodynamique du véhicule en fonction de la masse volumique de l'air du véhicule ($\rho_a$), de la surface frontale du véhicule ($A_f$), du coefficient de trainée ($c_x$), et de la vitesse du véhicule ($v$), et

- l'énergie ($E_r$) liée à la résistance au roulement en fonction de la masse du véhicule ($m$), du coefficient de résistance au roulement des pneumatiques ($c_r$) et de la pente de la route ($\alpha$), **caractérisé en ce que** le module (34) d'analyse des dépenses énergétiques du véhicule comprend un module (36) d'analyse des forces résistives comparant les dépenses énergétiques calculées avec un modèle du véhicule, fourni par une base de données, simulant le même trajet dans des conditions standards de pente nulle, et un module (38) d'analyse de la consommation de carburant en comparant la consommation mesurée avec une estimation de la consommation de carburant issue dudit modèle du véhicule.

## Patentansprüche

1. Verfahren zur Analyse der Verteilung des Energieverbrauchs eines Kraftfahrzeugs anhand von Daten eines Kommunikationsnetzes und von Parametern des Fahrzeugs, wobei:

   - der Energieverbrauch des Fahrzeugs auf einer Fahrstrecke berechnet wird,
   - dieser Energieverbrauch durch Vergleich mit vorbestimmten Modellen des Fahrzeugs, die dieselbe Fahrstrecke simulieren, analysiert wird,
   - eine Energiebilanz in Abhängigkeit von der Analyse des Energieverbrauchs und des Kraftstoffverbrauchs erstellt wird und die Energiebilanz an einen externen Server übermittelt wird, und wobei, vor der Berechnung des Energieverbrauchs des Fahrzeugs,
   - Daten abgerufen werden, die von dem Kommunikationsnetz stammen und in der Gruppe enthalten sind, welche das eingespritzte Kraftstoffvolumen ($q_{fuel}$), das indizierte Drehmoment des Verbrennungsmotors ($T_{ind}$), die Motordrehzahl ($\Omega_{eng}$), das mechanische Reibungsmoment des Verbrennungsmotors ($T_{fric}$), die Geschwindigkeit des Fahrzeugs ($v$), den eingelegten Gang des Getriebes ($\gamma_{gear}$), die Neigung der Straße ($\alpha$), die Längsbeschleunigung des Fahrzeugs ($\dot{v}$), die Position des Bremspedals ($P_{brake}$) und das Drehmoment des Retarders ($T_{ret}$) umfasst,
   - Daten aus einer Datenbank von Parametern des Fahrzeugs abgerufen werden, die in einem Rechner des Kraftfahrzeugs oder auf einem entfernten Server gehostet werden, wobei die Parameter in der Gruppe enthalten sind, welche den Radius der Räder ($r_w$), die Masse des Fahrzeugs ($m$), die äquivalente Masse der rollenden Elemente ($m_r$), den Rollwiderstandskoeffizienten der Reifen ($c_r$), die Dichte der Luft des Fahrzeugs ($\rho_a$), die Frontfläche des Fahrzeugs ($A_f$), den Strömungswiderstandskoeffizienten ($c_x$), den unteren Heizwert ($PCI$), die Dichte des Kraftstoffs ($\rho_{fuel}$), die Achsübersetzung ($\gamma_{axle}$), den Wirkungsgrad des Getriebes ($\eta_{GB}$), den Wirkungsgrad der Kraftübertragung ($\eta_{TRANS}$), die Trägheit der Hauptwelle ($J_{prim}$) und die Trägheit der rollenden Elemente des Motors ($J_{eng}$) umfasst,
   - außerdem die Leerlaufdrehzahl des Motors ($\Omega_{idle}$), die durch die Hilfselemente approximierte mittlere Leistung ($P_{aux}$), ein Kennfeld des Verbrauchs ($H^Q(x, y)$) und ein Kennfeld der physikalischen Grenzen des Motors ($H^T(x)$) abgerufen werden,

   **dadurch gekennzeichnet, dass** im Schritt der Berechnung des Energieverbrauchs:

   - die durch die Verbrennung des Kraftstoffs erzeugte Energie ($E_{fuel}$) in Abhängigkeit von dem unteren Heizwert ($PCI$), dem eingespritzten Kraftstoffvolumen ($q_{fuel}$) und der Dichte des Kraftstoffs ($\rho_{fuel}$) berechnet wird,
   - die indizierte mechanische Energie ($E_{ind}$) in Abhängigkeit vom indizierten Drehmoment des Verbrennungsmotors ($T_{ind}$) und der Motordrehzahl ($\Omega_{eng}$) berechnet wird,
   - die mit der inneren Reibung des Motors zusammenhängende Energie ($E_{fric}$) in Abhängigkeit vom mechanischen Reibungsmoment des Verbrennungsmotors ($T_{fric}$) und der Motordrehzahl ($\Omega_{eng}$) berechnet wird,
   - die während der Leerlaufphasen des Motors verbrauchte Energie ($E_{idle}$) in Abhängigkeit vom mechanischen Reibungsmoment des Verbrennungsmotors ($T_{fric}$), der Motordrehzahl ($\Omega_{eng}$) und der Leerlaufdrehzahl des Motors ($\Omega_{idle}$) berechnet wird,
   - die von den Hilfselementen verbrauchte Energie ($E_{aux}$) in Abhängigkeit von der durch die Hilfselemente ap-

proximierten mittleren Leistung ($P_{aux}$) berechnet wird,

- die mechanische Energie ($E_{pwt}^{+,wo\,/\,losses}$) am Ausgang der Motorwelle in Abhängigkeit vom indizierten Drehmoment des Verbrennungsmotors ($T_{ind}$), der Geschwindigkeit des Fahrzeugs ($v$), dem mechanischen Reibungsmoment des Verbrennungsmotors ($T_{fric}$) und dem eingelegten Gang des Getriebes ($\gamma_{gear}$) berechnet wird,

- die auf das Rad bezogenen mechanischen Energien ($E_{pwt}^{+,w\,/\,losses}$ , $E_{pwt}^{-,w\,/\,losses}$) in Abhängigkeit von der mechanischen Energie ($E_{pwt}^{+,wo\,/\,losses}$) am Ausgang der Motorwelle, dem Radius der Räder ($r_w$), der Achsübersetzung ($\gamma_{axle}$), dem Wirkungsgrad des Getriebes ($\eta_{GB}$) und dem Wirkungsgrad der Kraftübertragung ($\eta_{TRANS}$) berechnet werden,

- die potentielle Energie ($E_g$) in Abhängigkeit von der Masse des Fahrzeugs ($m$), der Geschwindigkeit des Fahrzeugs ($v$) und der Neigung der Straße ($\alpha$) berechnet wird,

- die kinetische Energie ($E_{inertia}$) in Abhängigkeit von der Geschwindigkeit des Fahrzeugs ($v$), der Längsbeschleunigung des Fahrzeugs ($\dot{v}$), der Masse des Fahrzeugs ($m$), der äquivalenten Masse der rollenden Elemente ($m_r$), der Achsübersetzung ($\gamma_{axle}$), dem Wirkungsgrad des Getriebes ($\eta_{GB}$), dem Wirkungsgrad der Kraftübertragung ($\eta_{TRANS}$), der Trägheit der Hauptwelle ($J_{prim}$), der Trägheit der rollenden Elemente des Motors ($J_{eng}$), dem eingelegten Gang des Getriebes und dem Radius der Räder berechnet wird,

- die mit der Aerodynamik des Fahrzeugs zusammenhängende Energie ($E_{aero}^{wo\,/\,wind}$) in Abhängigkeit von der Dichte der Luft des Fahrzeugs ($\rho_a$), der Frontfläche des Fahrzeugs ($A_f$), dem Strömungswiderstandskoeffizienten ($c_x$) und der Geschwindigkeit des Fahrzeugs ($v$) berechnet wird,

- die mit dem Rollwiderstand zusammenhängende Energie ($E_r$) in Abhängigkeit von der Masse des Fahrzeugs ($m$), dem Rollwiderstandskoeffizienten der Reifen ($c_r$) und der Neigung der Straße ($\alpha$) berechnet wird, und

**dadurch gekennzeichnet, dass** bei der Analyse des Energieverbrauchs die Widerstandskräfte analysiert werden, indem der berechnete Energieverbrauch mit einem von einer Datenbank gelieferten Modell des Fahrzeugs verglichen wird, das dieselbe Fahrstrecke unter Standardbedingungen simuliert, bei denen die Neigung null ist, und der Kraftstoffverbrauch analysiert wird, indem der gemessene Kraftstoffverbrauch mit einer aus dem Modell des Fahrzeugs resultierenden Schätzung des Kraftstoffverbrauchs verglichen wird.

2. Verfahren nach Anspruch 1, wobei bei der Analyse der Widerstandskräfte die mit den Widerstandskräften zusammenhängende gemessene Energie ($E_{meas}^{res}$) in Abhängigkeit von der mechanischen Energie ($E_{pwt}^{+,wo\,/\,losses}$) am Ausgang der Motorwelle, der kinetischen Energie ($E_{inertia}$) und der potentiellen Energie ($E_g$) berechnet wird, die mit den Widerstandskräften zusammenhängende modellierte Energie ($E_{\mathrm{model}}^{res}$) in Abhängigkeit von der mit der Aerodynamik zusammenhängenden Energie ($E_{aero}^{wo\,/\,wind}$) und der mit dem Rollwiderstand zusammenhängenden Energie ($E_r$) berechnet wird und die mit den Widerstandskräften zusammenhängenden Energien ($E_{meas}^{res}$, $E_{\mathrm{model}}^{res}$) verglichen werden.

3. Verfahren nach einem der Ansprüche 1 oder 2, wobei bei der Analyse des Kraftstoffverbrauchs eine erste Menge ($Q_{eng}$) von eingespritztem Kraftstoff in Abhängigkeit von der Motordrehzahl ($\Omega_{eng}$) und einem Kennfeld des Verbrauchs ($H^Q(x,y)$) des Verbrauchs berechnet wird.

4. Verfahren nach einem der Ansprüche 1 bis 3, wobei bei der Analyse des Kraftstoffverbrauchs eine zweite Menge ($Q_f$) von eingespritztem Kraftstoff in Abhängigkeit vom Geschwindigkeitsprofil und vom Neigungsprofil und von einem Kennfeld des Motors ($H^T(x)$), welches ermöglicht, die Motordrehzahl mit dem tatsächlichen Drehmoment zu verknüpfen, berechnet wird.

5. Verfahren nach den Ansprüchen 3 und 4, wobei bei der Analyse des Kraftstoffverbrauchs eine dritte Menge ($Q_{f,Sd}$) von eingespritztem Kraftstoff in Abhängigkeit vom Geschwindigkeitsprofil und vom Neigungsprofil unter Standardbedingungen, bei denen die Neigung null ist, und eine vierte Menge ($Q_{f,v,sd}$) von eingespritztem Kraftstoff in Abhängigkeit vom Geschwindigkeitsprofil und vom Neigungsprofil unter Standardbedingungen, bei denen die Neigung null ist, und an einem Fahrzeugmodell, das dieselbe Fahrstrecke unter Standardbedingungen simuliert, bei denen die Neigung null ist, berechnet werden und die dritte und vierte Menge von Kraftstoff mit der ersten und zweiten Menge von Kraftstoff verglichen werden.

6. Verfahren nach einem der vorhergehenden Ansprüche, wobei der Energieverbrauch nur berechnet wird, falls die Position des Bremspedals ($P_{brake}$) und das Drehmoment des Retarders ($T_{ret}$) null sind und kein Gangwechsel stattfindet.

7. Vorrichtung zur Analyse der Verteilung des Energieverbrauchs eines Kraftfahrzeugs anhand von Daten eines Kommunikationsnetzes und von Parametern des Fahrzeugs, welche ein Modul (30) zur Erstellung einer Energiebilanz eines Kraftfahrzeug auf einer Fahrstrecke und ein Modul (50) zur Übermittlung dieser Energiebilanz an einen externen Server umfasst, wobei das Modul zur Erstellung einer Energiebilanz ein Modul (32) zur Berechnung des Energieverbrauchs des Fahrzeugs auf einer Fahrstrecke und ein Modul (34) zur Analyse des von dem Modul (32) zur Berechnung des Energieverbrauchs bestimmten Energieverbrauchs des Fahrzeugs umfasst, wobei die Vorrichtung ein Datenverarbeitungsmodul (20) umfasst, das am Eingang vom Kommunikationsnetz stammende Daten empfängt, die in der Gruppe enthalten sind, welche das eingespritzte Kraftstoffvolumen ($q_{fuel}$), das indizierte Drehmoment des Verbrennungsmotors ($T_{ind}$), die Motordrehzahl ($\Omega_{eng}$), das mechanische Reibungsmoment des Verbrennungsmotors ($T_{fric}$), die Geschwindigkeit des Fahrzeugs ($v$), den eingelegten Gang des Getriebes ($\gamma_{gear}$), die Neigung der Straße ($\alpha$), die Längsbeschleunigung des Fahrzeugs ($\dot{v}$), die Position des Bremspedals ($P_{brake}$) und das Drehmoment des Retarders ($T_{ret}$) umfasst, sowie Daten aus einer Datenbank von Parametern des Fahrzeugs empfängt, die in einem Rechner des Kraftfahrzeugs oder auf einem entfernten Server gehostet werden, wobei die Parameter in der Gruppe enthalten sind, welche den Radius der Räder ($r_w$), die Masse des Fahrzeugs ($m$), die äquivalente Masse der rollenden Elemente ($m_r$), den Rollwiderstandskoeffizienten der Reifen ($c_r$), die Dichte der Luft des Fahrzeugs ($\rho_a$), die Frontfläche des Fahrzeugs ($A_f$), den Strömungswiderstandskoeffizienten ($c_x$), den unteren Heizwert ($PCI$), die Dichte des Kraftstoffs ($\rho_{fuel}$), die Achsübersetzung ($\gamma_{axle}$), den Wirkungsgrad des Getriebes ($\eta_{GB}$), den Wirkungsgrad der Kraftübertragung ($\eta_{TRANS}$), die Trägheit der Hauptwelle ($J_{prim}$) und die Trägheit der rollenden Elemente des Motors ($J_{eng}$) umfasst, und drei Kalibrierungskonstanten, welche die Leerlaufdrehzahl des Motors ($\Omega_{idle}$), die durch die Hilfselemente approximierte mittlere Leistung ($P_{aux}$), ein Kennfeld des Verbrauchs ($H^Q(x,y)$) und ein Kennfeld der physikalischen Grenzen des Motors ($H^T(x)$) umfassen, **dadurch gekennzeichnet, dass** das Modul (32) zur Berechnung des Energieverbrauchs des Fahrzeugs auf einer Fahrstrecke dafür ausgelegt ist zu berechnen:

- die durch die Verbrennung des Kraftstoffs erzeugte Energie ($E_{fuel}$) in Abhängigkeit von dem unteren Heizwert ($PCI$), dem eingespritzten Kraftstoffvolumen ($q_{fuel}$) und der Dichte des Kraftstoffs ($\rho_{fuel}$),
- die indizierte mechanische Energie ($E_{ind}$) in Abhängigkeit vom indizierten Drehmoment des Verbrennungsmotors ($T_{ind}$) und der Motordrehzahl ($\Omega_{eng}$),
- die mit der inneren Reibung des Motors zusammenhängende Energie ($E_{fric}$) in Abhängigkeit vom mechanischen Reibungsmoment des Verbrennungsmotors ($T_{fric}$) und der Motordrehzahl ($\Omega_{eng}$),
- die während der Leerlaufphasen des Motors verbrauchte Energie ($E_{idle}$) in Abhängigkeit vom mechanischen Reibungsmoment des Verbrennungsmotors ($T_{fric}$), der Motordrehzahl ($\Omega_{eng}$) und der Leerlaufdrehzahl des Motors ($\Omega_{idle}$),
- die von den Hilfselementen verbrauchte Energie ($E_{aux}$) in Abhängigkeit von der durch die Hilfselemente approximierten mittleren Leistung ($P_{aux}$),
- die mechanische Energie $\left( E_{pwt}^{+,wo/losses} \right)$ am Ausgang der Motorwelle in Abhängigkeit vom indizierten Drehmoment des Verbrennungsmotors ($T_{ind}$), der Geschwindigkeit des Fahrzeugs ($v$), dem mechanischen Reibungsmoment des Verbrennungsmotors ($T_{fric}$) und dem eingelegten Gang des Getriebes ($\gamma_{gear}$),
- die auf das Rad bezogenen mechanischen Energien $\left( E_{pwt}^{+,w/losses}, E_{pwt}^{-,w/losses} \right)$ in Abhängigkeit von der mechanischen Energie $\left( E_{pwt}^{+,wo/losses} \right)$ am Ausgang der Motorwelle, dem Radius der Räder ($r_w$), der Achsübersetzung ($\gamma_{axle}$), dem Wirkungsgrad des Getriebes ($\eta_{GB}$) und dem Wirkungsgrad der Kraftübertragung ($\eta_{TRANS}$),
- die potentielle Energie ($E_g$) in Abhängigkeit von der Masse des Fahrzeugs ($m$), der Geschwindigkeit des Fahrzeugs ($v$) und der Neigung der Straße ($\alpha$),
- die kinetische Energie ($E_{inertia}$) in Abhängigkeit von der Geschwindigkeit des Fahrzeugs ($v$), der Längsbeschleunigung des Fahrzeugs ($\dot{v}$), der Masse des Fahrzeugs ($m$), der äquivalenten Masse der rollenden Elemente ($m_r$), der Achsübersetzung ($\gamma_{axle}$), dem Wirkungsgrad des Getriebes ($\eta_{GB}$), dem Wirkungsgrad der Kraftüber-

tragung ($\eta_{TRANS}$), der Trägheit der Hauptwelle ($J_{prim}$), der Trägheit der rollenden Elemente des Motors ($J_{eng}$), dem eingelegten Gang des Getriebes und dem Radius der Räder,

- die mit der Aerodynamik des Fahrzeugs zusammenhängende Energie $( E_{aero}^{wo/wind} )$ in Abhängigkeit von der Dichte der Luft des Fahrzeugs ($\rho_a$), der Frontfläche des Fahrzeugs ($A_f$), dem Strömungswiderstandskoeffizienten ($c_x$) und der Geschwindigkeit des Fahrzeugs (v), und

- die mit dem Rollwiderstand zusammenhängende Energie ($E_r$) in Abhängigkeit von der Masse des Fahrzeugs ($m$), dem Rollwiderstandskoeffizienten der Reifen ($c_r$) und der Neigung der Straße ($\alpha$), **dadurch gekennzeichnet, dass** das Modul (34) zur Analyse des Energieverbrauchs des Fahrzeugs ein Modul (36) zur Analyse der Widerstandskräfte, das den berechneten Energieverbrauch mit einem von einer Datenbank gelieferten Modell des Fahrzeugs vergleicht, das dieselbe Fahrstrecke unter Standardbedingungen mit Neigung null simuliert, und ein Modul (38) zur Analyse des Kraftstoffverbrauchs durch Vergleich des gemessenen Kraftstoffverbrauchs mit einer aus dem Modell des Fahrzeugs resultierenden Schätzung des Kraftstoffverbrauchs umfasst.

## Claims

1.  Method for analysing the distribution of energy expenditures of a motor vehicle from data from a communications network and from parameters of the vehicle, in which:

    - the energy expenditures of the vehicle over a journey are calculated,
    - the said energy expenditures are analysed by comparing them with predetermined models of the vehicle simulating the same journey,
    - an energy balance report is formulated on the basis of the analysis of the energy expenditures and of the fuel consumption and the said energy balance report is communicated to an external server, and in which, prior to calculating the energy expenditures of the vehicle,
    - data from the communications network is gathered, the data being comprised in the group including the volume of fuel injected ($q_{fuel}$) the indicated combustion engine torque ($T_{ind}$), the engine speed ($\Omega_{eng}$), the combustion engine mechanical friction torque ($T_{fric}$), the vehicle speed (v), the gearbox gear ratio engaged ($\gamma_{gear}$), the gradient of the roadway ($\alpha$), the longitudinal acceleration of the vehicle ($\dot{v}$), the position of the brake pedal ($P_{brake}$) and the torque of the retarder ($T_{ret}$),
    - data is gathered from a database of vehicle parameters housed in a computer of the motor vehicle or on a remote server, the parameters being comprised in the group including the radius of the wheels ($r_w$), the mass of the vehicle ($m$), the equivalent mass of the running elements ($m_r$), the rolling resistance coefficient for the tyres ($c_r$), the vehicle air density ($\rho_a$), the frontal area of the vehicle ($A_f$), the coefficient of drag ($c_x$), the lower calorific value $(PCI)$, the density of the fuel ($\rho_{fuel}$), the axle ratio ($\gamma_{axle}$), the gearbox efficiency ($\eta_{GB}$), the transmission efficiency ($\eta_{TRANS}$), the inertia of the primary shaft ($J_{prim}$) and the inertia of the running elements of the engine ($J_{eng}$),
    - the engine speed at idle ($\Omega_{idle}$), the mean power approximated by the auxiliary elements ($P_{aux}$), a map ($H^Q(x, y)$) of fuel consumption and a map ($H^T(x)$), of the physical limits of the engine are also gathered, **characterized in that**

    during the step of calculating the energy expenditures:

    - the energy ($E_{fuel}$), produced by burning the fuel is calculated on the basis of the lower calorific value $(PCI)$, of the volume of fuel injected ($q_{fuel}$) and of the density of the fuel ($\rho_{fuel}$),
    - the indicated mechanical energy ($E_{ind}$) is calculated on the basis of the indicated combustion engine torque ($T_{ind}$) and of the engine speed ($\Omega_{eng}$),
    - the energy ($E_{fric}$) associated with internal friction within the engine is calculated on the basis of the combustion engine mechanical friction torque ($T_{fric}$) and of the engine speed ($\Omega_{eng}$),
    - the energy ($E_{idle}$) expended during the engine idling phases is calculated on the basis of the combustion engine mechanical friction torque ($T_{fric}$), of the engine speed ($\Omega_{eng}$), and of the engine idling speed ($\Omega_{idle}$),
    - the energy ($E_{aux}$) expended by the auxiliary elements is calculated on the basis of the mean power approximated by the auxiliary elements ($P_{aux}$),
    - the mechanical energy $( E_{pwt}^{+,wo/losses} )$ on the output side of the engine shaft is calculated on the basis of the indicated combustion engine torque ($T_{ind}$), of the vehicle speed (v), of the combustion engine mechanical friction torque ($T_{fric}$), and of the gearbox gear ratio engaged ($\gamma_{gear}$),

- the mechanical energies $( E_{pwt}^{+,w/losses} , E_{pwt}^{-,w/losses} )$ with respect to the wheel are calculated on the basis of the mechanical energy $( E_{pwt}^{+,wo/losses} )$ on the output side of the engine shaft, of the radius of the wheels ($r_w$), of the axle ratio ($\gamma_{axle}$), of the gearbox efficiency ($\eta_{GB}$), and of the transmission efficiency ($\eta_{TRANS}$),

- the potential energy ($E_g$) is calculated on the basis of the mass of the vehicle ($m$), of the vehicle speed ($v$), and of the gradient of the roadway ($\alpha$),

- the kinetic energy ($E_{inertia}$) is calculated on the basis of the vehicle speed ($v$), of the longitudinal acceleration of the vehicle ($\dot{v}$), of the mass of the vehicle ($m$), of the equivalent mass of the running elements ($m_r$), of the axle ratio ($\gamma_{axle}$), of the gearbox efficiency ($\eta_{GB}$), of the transmission efficiency ($\eta_{TRANS}$), of the inertia of the primary shaft ($J_{prim}$), of the inertia of the running elements of the engine ($J_{eng}$), of the gearbox gear ratio engaged and of the radius of the wheels,

- the energy $( E_{aero}^{wo/wind} )$ associated with the aerodynamics of the vehicle is calculated on the basis of the vehicle air density ($\rho_a$), of the frontal area of the vehicle ($A_f$), of the coefficient of drag ($c_x$), and of the vehicle speed ($v$), and

- the energy ($E_r$) associated with the rolling resistance is calculated on the basis of the mass of the vehicle ($m$), of the rolling resistance coefficient for the tyres ($c_r$) and of the gradient of the roadway ($\alpha$).

and **characterized in that** during the analysis of the energy expenditures, the resistive forces are analysed by comparing the calculated energy expenditures with a model of the vehicle, supplied by a database, simulating the same journey under standard conditions in which the gradient is zero, and the fuel consumption is analysed by comparing the measured fuel consumption with an estimate of the fuel consumption, derived from the said model of the vehicle.

2. Method according to Claim 1, in which, during the analysis of the resistive forces, the measured energy $( E_{meas}^{res} )$ associated with the resistive forces is calculated on the basis of the mechanical energy $( E_{pwt}^{+,wo/losses} )$ on the output side of the engine shaft, of the kinetic energy ($E_{inertia}$), and of the potential energy ($E_g$), the modelled energy $( E_{model}^{res} )$ associated with the resistive forces is calculated on the basis of the energy $( E_{aero}^{wo/wind} )$ associated with the aerodynamics and of the energy ($E_r$) associated with the rolling resistance, and the said energies $( E_{meas}^{res}, E_{model}^{res} )$ associated with resistive forces are compared.

3. Method according to either of Claims 1 and 2, in which, during the analysis of the fuel consumption, a first quantity ($Q_{eng}$) of fuel injected is calculated on the basis of the engine speed ($\Omega_{eng}$) and of a map ($H^Q(x,y)$) of fuel consumption.

4. Method according to any one of Claims 1 to 3, in which, during the analysis of the fuel consumption, a second quantity ($Q_f$) of fuel injected is calculated on the basis of the speed profile and of the gradient profile and of an engine map ($H^T(x)$) that connects engine speed with effective torque.

5. Method according to Claims 3 and 4, in which, during the analysis of the fuel consumption, a third quantity ($Q_{f,sd}$) of fuel injected is calculated on the basis of the speed profile and of the gradient profile under standard conditions in which the gradient is zero, and a fourth quantity ($Q_{f,v,sd}$) of fuel injected is calculated on the basis of the speed profile and of the gradient profile under standard conditions in which the gradient is zero and on a model of the vehicle simulating the same journey under standard conditions in which the gradient is zero and the said third and fourth quantities of fuel are compared with the said first and second quantities of fuel.

6. Method according to any one of the preceding claims, in which the energy expenditures are calculated only if the position of the brake pedal ($P_{brake}$) and the torque of the retarder ($T_{ret}$) are zero and no gearshift is in progress.

7. Device for analysing the distribution of energy expenditures of a motor vehicle on the basis of data from a communications network and of parameters of the vehicle, comprising a module (30) for formulating an energy balance report on a motor vehicle on a journey and a module (50) for communicating the said energy balance report to an external server, the said module for formulating an energy balance report comprising a module (32) for calculating energy expenditures of a vehicle on a journey, and a module (34) for analysing the energy expenditures of the vehicle as determined by the module (32) for calculating the energy expenditures, the device comprising a data processing module (20) receiving as input data derived coming from the communications network, which data are comprised in the group including the volume of fuel injected ($q_{fuel}$), the combustion engine indicated torque ($T_{ind}$), the engine speed ($\Omega_{eng}$), the combustion engine mechanical friction torque ($T_{fric}$), the vehicle speed ($v$), the gearbox gear ratio engaged ($\gamma_{gear}$), the gradient of the roadway ($\alpha$), the longitudinal acceleration of the vehicle ($\dot{v}$), the position of the brake pedal ($P_{brake}$) and the torque of the retarder ($T_{ret}$), as well as data from a database of vehicle parameters housed in a computer of the motor vehicle or on a remote server, the parameters being comprised in the group including the radius of the wheels ($r_w$), the mass of the vehicle (m), the equivalent mass of the running elements ($m_r$), the rolling resistance coefficient for the tyres ($m_r$), the vehicle air density ($\rho_a$), the frontal area of the vehicle ($A_f$), the coefficient of drag ($c_x$), the lower calorific value (PCI), the density of the fuel ($\rho_{fuel}$), the axle ratio ($\gamma_{axle}$), the gearbox efficiency ($\eta_{GB}$), the transmission efficiency ($\eta_{TRANS}$), the inertia of the primary shaft ($J_{prim}$) and the inertia of the running elements of the engine ($J_{eng}$), and three calibration constants including the engine idling speed ($\Omega_{idle}$), the mean power approximated by the auxiliary elements ($P_{aux}$), a map ($H^Q(x,y)$) of fuel consumption and a map ($H^T(x)$) of the physical limits of the engine, **characterized in that** the module (32) for calculating the energy expenditures of the vehicle on a journey is configured to calculate

- the energy ($E_{fuel}$) produced by burning the fuel, on the basis of the lower calorific value (PCI), of the volume of fuel injected ($q_{fuel}$) and of the density of the fuel ($\rho_{fuel}$),
- the indicated mechanical energy ($E_{ind}$), on the basis of the combustion engine indicated torque ($T_{ind}$) and of the engine speed ($\Omega_{eng}$),
- the energy ($E_{fric}$) associated with internal friction within the engine, on the basis of the combustion engine mechanical friction torque ($T_{fric}$) and of the engine speed ($\Omega_{eng}$),
- the energy ($E_{idle}$) expended during the engine idling phases, on the basis of the combustion engine mechanical friction torque ($T_{fric}$), of the engine speed ($\Omega_{eng}$), and of the engine idling speed ($\Omega_{idle}$),
- the energy ($E_{aux}$) expended by the auxiliary elements, on the basis of the mean power approximated by the auxiliary elements ($P_{aux}$),
- the mechanical energy $\left(E_{pwt}^{+,wo/losses}\right)$ on the output side of the engine shaft, on the basis of the indicated combustion engine torque ($T_{ind}$), of the vehicle speed ($v$), of the combustion engine mechanical friction torque ($T_{fric}$), and of the gearbox gear ratio engaged ($\gamma_{gear}$),
- the mechanical energies $\left(E_{pwt}^{+,w/losses}, E_{pwt}^{-,w/losses}\right)$ with respect to the wheel, on the basis of the mechanical energy $\left(E_{pwt}^{+,wo/losses}\right)$ on the output side of the engine shaft, of the radius of the wheels ($r_w$), of the axle ratio ($\gamma_{axle}$), of the gearbox efficiency ($\eta_{GB}$), and of the transmission efficiency ($\eta_{TRANS}$),
- the potential energy ($E_g$), on the basis of the mass of the vehicle (m), of the vehicle speed ($v$), and of the gradient of the roadway ($\alpha$),
- the kinetic energy ($E_{inertia}$), on the basis of the vehicle speed ($v$), of the longitudinal acceleration of the vehicle ($\dot{v}$), of the mass of the vehicle ($m$), of the equivalent mass of the running elements ($m_r$), of the axle ratio ($\gamma_{axle}$), of the gearbox efficiency ($\eta_{GB}$), of the transmission efficiency ($\eta_{TRANS}$), of the inertia of the primary shaft ($J_{prim}$), of the inertia of the running elements of the engine ($J_{eng}$), of the gearbox gear ratio engaged and of the radius of the wheels,
- the energy $\left(E_{aero}^{wo/wind}\right)$ associated with the aerodynamics of the vehicle, on the basis of the vehicle air density ($\rho_a$), of the frontal area of the vehicle ($A_f$), of the coefficient of drag ($c_x$), and of the vehicle speed ($v$), and
- the energy ($E_r$) associated with the rolling resistance, on the basis of the mass of the vehicle (m), of the rolling resistance coefficient for the tyres ($c_r$) and of the gradient of the roadway ($\alpha$),

**characterized in that** the module (34) for analysing the energy expenditures of the vehicle comprises a module (36) for analysing the resistive forces, that compares the calculated energy expenditures with a model of the vehicle, supplied by a database, simulating the same journey under standard conditions of zero gradient, and a module (38) for analysing the fuel consumption by comparing the measured fuel consumption with an estimate of the fuel consumption, derived from the said model of the vehicle.

# FIG.1

# FIG.2

60

```
┌──────────────────────┐
│                      ▼
│              ┌──────────────┐
│              │      61      │
│              └──────────────┘
│                      │
│                      ▼
│              ┌──────────────┐
│              │      62      │
│              └──────────────┘
│                      │
│          ┌───────────┴───────────┐
│          ▼                       ▼
│  ┌──────────────┐       ┌──────────────┐       ┌──────────────┐
│  │      64      │       │      66      │◄──────│      67      │
│  └──────────────┘       └──────────────┘       └──────────────┘
│          │                       │
│          └───────────┬───────────┘
│                      ▼
│              ┌──────────────┐
│              │      68      │
│              └──────────────┘
│                      │
└──────────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2237985 A1
- DE 112012006598 A1

- FR 2976888 A1